# EUROPÄISCHE PATENTSCHRIFT

(11) **EP 4 052 554 B1**
(45) Veröffentlichungstag und Bekanntmachung des Hinweises auf die Patenterteilung: **01.07.2026**
(21) Anmeldenummer: 22155403.3
(22) Anmeldetag: 07.02.2022
(51) Int. Cl.: A01C 5/06, A01C 23/02

(54) **SCHLEPPSCHUHVERTEILER ZUM VERTEILEN VON GÜLLE**
TRAILING SHOE SPREADER FOR SPREADING LIQUID MANURE
ÉPANDEUR D'ENFOUISSEMENT À PATINS PERMETTANT D'ÉPANDRE DU LISIER

(30) Priorität: 12.02.2021 DE 102021103386
(43) Veröffentlichungstag der Anmeldung: 07.09.2022
(73) Patentinhaber: Fliegl Agro-Center GmbH, 84556 Kastl (DE)
(72) Erfinder: Fliegl sen., Josef, 84556 Kastl (DE)
(74) Vertreter: Nußbaum, Christopher

(56) Entgegenhaltungen:
- AT-U1- 15 278
- DE-A1- 2 742 193
- US-B1- 6 701 856

## Beschreibung

Die vorliegende Erfindung betrifft einen Schleppschuhverteiler zum Verteilen von Gülle.

Insbesondere im Einsatzbereich Grünland ist die Düngung mit Gülle sinnvoll und weit verbreitet, da die Nährstoffe der Gülle allein für die Versorgung des Bestandes ausreichen können und so ein ausreichendes Pflanzenwachstum sichergestellt werden kann. Zudem regt Gülle die Humusbildung an und versorgt Lebewesen mit Nahrung.

Die Thematik der Futterverschmutzung, insbesondere im Grünland, durch mögliche Reste der applizierten Gülle beschäftigt viele Landwirte. Neben der Witterung, der Viskosität des Substrats und dem Schnittzeitpunkt wird dies durch die Gülleausbringtechnik beeinflusst.

Die AT 15 278 U1 offenbart eine Düngemitteleinbringungs-Einrichtung, deren Unterflurdüngeinjektoren jeweils zum einen als Düngemittelaufnahmegraben-Bildungsorgan ausgebildet sind, indem der jeweilige Unterflurdüngeinjektor mit einem flach keilartigen Unterflurstollen- und -grabenbildungsschuh ausgestattet ist, der vertikal tief in den Boden einsenkbar ist. Andererseits ist der jeweilige Unterflurdüngeinjektor als rohrartiges Düngemittel-Einbringungsorgan ausgebildet, durch welches hindurch ein fließfähiges Düngemittel direkt in einen vom Unterflurdüngeinjektor gleichzeitig gebildeten Düngemittelaufnahmegraben eingebracht werden kann.

Ferner zeigt die DE 27 42 193 A1 eine Vorrichtung zum Düngen von Böden. Mittels der Vorrichtung können flüssige Düngemittel in den Boden eingebracht werden. Die Vorrichtung umfasst dafür ein Rohrstück, dessen untere Öffnung sich bei der Verwendung der Vorrichtung innerhalb des Bodens befindet. Eine Platte umgibt die Öffnung. Beim Fortbewegen der Vorrichtung gräbt sich die keilförmige Platte in den Boden ein, wodurch die untere Öffnung des Rohrstücks in den Boden hineinbewegt wird, sodass das Düngemittel im Boden eingebracht wird.

Es ist die Aufgabe der vorliegenden Erfindung, eine Lösung bereitzustellen, mittels welcher Gülle besonders effektiv in einen Untergrund eingebracht werden kann.

Diese Aufgabe wird durch eine Schleppschuhverteiler mit den Merkmalen des Anspruchs 1 gelöst. Weitere mögliche Ausgestaltungen der Erfindung sind in den Unteransprüchen, der Beschreibung und den Figuren angegeben.

Der erfindungsgemäße Schleppschuhverteiler zum Verteilen von Gülle umfasst mehrere Gülleschläuche mit Austrittsöffnungen zum Ausbringen der Gülle auf einem Untergrund. Des Weiteren weist der Schleppschuhverteiler mehrere Schleppschuhe auf, die in einer Arbeitsstellung des Schleppschuhverteilers dazu ausgelegt sind, den Untergrund aufzuschlitzen, bevor die Gülle aus den Austrittsöffnungen auf den Untergrund gelangt. Ferner weist der Schleppschuhverteiler mehrere Einarbeitungseinheiten auf, die in der Arbeitsstellung des Schleppschuhverteilers dazu ausgelegt sind, beim Fortbewegen des Schleppschuhverteilers auf der ausgebrachten Gülle abrollend diese in den Untergrund einzuarbeiten.

Insbesondere sind in der Arbeitsstellung des Schleppschuhverteilers bezogen auf eine Fahrtrichtung des Schleppschuhverteilers die Austrittsöffnungen der Gülleschläuche zwischen den Schleppschuhen und den Einarbeitungseinheiten angeordnet. Bezogen auf die besagte vorgegebene Fahrtrichtung des Schleppschuhverteilers sind also die Schleppschuhe vor jeweiligen Austrittsöffnungen der Gülleschläuche angeordnet. Wird der Schleppschuhverteiler über einen Untergrund bewegt, so schlitzen also zunächst die Schleppschuhe den Untergrund und/oder entsprechendes auf dem Untergrund vorhandenes Pflanzenmaterial auf, wonach dann erst die Gülle aus den Austrittsöffnungen der Gülleschläuche auf den geschlitzten Untergrund hineingelangen kann.

Die besagten Einarbeitungseinheiten dienen dann dazu, die ausgebrachte Gülle in den Untergrund einzuarbeiten. Dies geschieht durch mechanische Krafteinwirkung der Einarbeitungseinheiten, die beim Fortbewegen des Schleppschuhverteilers auf der bereits ausgebrachten Gülle abrollend diese in den Untergrund einarbeiten. Insbesondere sind die Einarbeitungseinheiten dafür bezogen auf die vorgegebene Fahrtrichtung des Schleppschuhverteilers hinter den jeweiligen Austrittsöffnungen der Gülleschläuche angeordnet. Der Untergrund wird mittels der Einarbeitungseinheiten aufgelockert beziehungsweise aufgerissen, um mittels der Einarbeitungseinheiten die applizierte Gülle in den Untergrund einzuarbeiten.

Über die Austrittsöffnungen der Gülleschläuche werden also Güllespuren beziehungsweise Güllelinien auf dem Untergrund aufgebracht, wobei diese Güllespuren beziehungsweise Güllelinien mittels der Einarbeitungseinheiten in den jeweiligen Untergrund eingearbeitet werden. Der Schleppschuhverteiler kann beispielsweise Federzinken aufweisen, an denen unter anderem auch die Gülleschläuche angebracht sein können, wobei zudem die Schleppschuhe und auch die Einarbeitungseinheiten zumindest mittelbar an diesen Federzinken angebracht sein können, die dafür sorgen, die Schleppschuhe und die Einarbeitungseinheiten in Richtung des Untergrunds mit einer gewissen Federkraft zu beaufschlagen. Sowohl das Aufschlitzen des Untergrunds als auch das Einarbeiten der ausgebrachten Gülle mittels der Einarbeitungseinheiten kann dadurch begünstigt werden.

Mittels des erfindungsgemäßen Schleppschuhverteilers ist es also möglich, ausgebrachte Gülle in einem einzigen Arbeitsschritt mittels der besagten Einarbeitungseinheiten auch noch in den Untergrund einzuarbeiten, sodass besagter Untergrund beziehungsweise Boden besonders gut mit der Gülle infiltriert werden kann. Die eingangs erwähnte Futterverschmutzung, insbesondere im Grünland, kann somit mittels des erfindungsgemäßen Schleppschuhverteilers vermieden oder zumindest reduziert werden. Mit anderen Worten bietet der erfindungsgemäße Schleppschuhverteiler eine besonders effiziente Gülleausbring- und Gülleeinarbeitungstechnik, mittels welcher überirdische Reste der applizierten Gülle besonders geringgehalten werden können, da die Einarbeitungseinheiten beim Fortbewegen des Schleppschuhverteilers bereits dafür sorgen, die applizierte Gülle in den Untergrund einzuarbeiten.

Eine mögliche Ausgestaltung der Erfindung sieht vor, dass zumindest ein Teil der Einarbeitungseinheiten mehrere sich radial nach außen erstreckende Zinken zum Einarbeiten der ausgebrachten Gülle in den Untergrund aufweist. Diese Zinken können beispielsweise Rundstäbe aus Federstahl sein, die kreisförmig auf einer Art Grundkörper angebracht sein können und sich radial von diesem nach außen erstrecken. Diese Zinken können bei der Fortbewegung des Schleppschuhverteilers über dem Untergrund abrollen und in diesen eindringen, wobei die Zinken dabei die ausgebrachte beziehungsweise auf den Untergrund applizierte Gülle in den Untergrund einarbeiten können. Aus der Gülle gebildete Güllespuren beziehungsweise Güllelinien können also so mittels der besagten Zinken durchmischt und in den Untergrund eingearbeitet werden, sodass überirdisch möglichst wenig Güllereste verbleiben.

Gemäß einer weiteren möglichen Ausgestaltung der Erfindung ist es vorgesehen, dass zumindest ein Teil der Einarbeitungseinheiten als glatte Scheibe ausgebildet ist. Unter einer glatten Scheibe ist zu verstehen, dass diese umfangsseitig keine Vertiefungen aufweist. Durch einen derartigen Aufbau der Einarbeitungseinheiten in Form der glatten Scheibe ist es möglich, die Einarbeitungseinheiten besonders robust und unempfindlich zu gestalten. Zudem ist es auch mittels der als glatte Scheibe ausgebildeten Einarbeitungseinheit zuverlässig möglich, die applizierte Gülle nach dem Ablegen beziehungsweise Aufbringen auf dem Untergrund während der Fortbewegung des Schleppschuhverteilers in einem einzigen Arbeitsgang gleich in den Boden einzuarbeiten.

In weiterer möglicher Ausgestaltung der Erfindung ist es vorgesehen, dass zumindest ein Teil der Einarbeitungseinheiten als gezackte Scheibe ausgebildet ist. Dabei ist beispielsweise möglich, dass diese Einarbeitungsscheiben umfangsseitig mehrere Zacken aufweisen, die sich in radialer Richtung von einer Drehachse weg erstrecken, sodass diese Zacken die auf den Untergrund applizierte Gülle besonders gut in den Untergrund einarbeiten können. Die Einarbeitungseinheiten können unabhängig von ihrer konkreten Ausgestaltung aus unterschiedlichsten Materialen bestehen, beispielsweise aus Kunststoff oder auch aus Stahl.

Gemäß einer weiteren möglichen Ausgestaltung der Erfindung ist es vorgesehen, dass jeweilige Höhenverstellungen dazu ausgelegt sind, die Einarbeitungseinheiten relativ zu den Schleppschuhen in der Höhe und damit eine Eindringtiefe der Einarbeitungseinheiten in den Untergrund zu verstellen. Je nach Randbedingungen bei der Gülleausbringung ist es somit möglich, die Eindringtiefe der Einarbeitungseinheiten in den Untergrund einzustellen, sodass das bestmögliche Ergebnis erzielt werden kann. So kann beispielsweise auf unterschiedliche Untergründe beziehungsweise Untergrundarten reagiert werden, indem einfach die Eindringtiefe mittels der Höhenverstellungen angepasst wird. Auch kann beispielsweise auf unterschiedliche Viskositäten der auszubringen Gülle reagiert werden, indem die Höhenverstellungen dazu genutzt werden, die Einarbeitungseinheiten in ihrer Höhe relativ zu den Schleppschuhen zu verstellen und damit die Eindringtiefe der Einarbeitungseinheiten und damit die Art und Weise einzustellen, wie die ausgebrachte Gülle in den jeweiligen Untergrund eingearbeitet wird.

Eine weitere mögliche Ausgestaltung der Erfindung sieht vor, dass die Höhenverstellungen jeweilige an den Schleppschuhen angeordnete bogenförmige Führungen aufweisen, in denen jeweilige Halter geführt sind, an denen die Einarbeitungseinheiten zumindest mittelbar gelagert sind. Die Führungen können beispielsweise Ausnehmungen beziehungsweise auch Nuten sein, in denen die besagten Halter verschwenkbar und fixierbar geführt sind. An den Haltern sind wiederum die besagten Einarbeitungseinheiten zumindest mittelbar gelagert. Beispielsweise können die Halter mittels Schrauben oder anderer Fixiermittel in einer bestimmten Stellung innerhalb der jeweiligen bogenförmigen Führungen fixiert werden, wenn eine bestimmte Höhenpositionierung eingestellt wurde. So ist es möglich, auf besonders einfache und rein mechanische Weise die Einarbeitungseinheiten in ihrer Höhe und somit in ihrer Eindringtiefe zu verstellen. Darüber hinaus ist es beispielsweise auch noch zusätzlich oder alternativ möglich, unterschiedlichste Aktoren vorzusehen, mittels welchen die Höhenverstellung der Einarbeitungseinheiten erfolgen kann.

Eine weitere mögliche Ausgestaltung der Erfindung sieht vor, dass jeweilige Winkelverstellungen dazu ausgelegt sind, jeweilige Anstellwinkel der Einarbeitungseinheiten relativ zu den Schleppschuhen und damit zu einer Fahrtrichtung des Schleppschuhverteilers zu verstellen. Durch diese Verstellbarkeit hinsichtlich der Anstellwinkel der Einarbeitungseinheiten ist es möglich, ihre "Aggressivität" zu justieren, also wie stark der Untergrund mittels der Einarbeitungseinheiten aufgelockert beziehungsweise aufgerissen wird, um mittels der Einarbeitungseinheiten die applizierte Gülle in den Untergrund einzuarbeiten. Mit anderen Worten ist es über besagte Winkelverstellungen also möglich, eine Schrägstellung der Einarbeitungseinheiten relativ zur Fahrtrichtung des Schleppschuhverteilers zu variieren. Anders ausgedrückt ist es somit auch möglich, einen Anstellwinkel der Einarbeitungseinheiten relativ zu den Schleppschuhen einzustellen. Die Schleppschuhe können beispielsweise mehr oder weniger fluchtend mit der Fahrtrichtung des Schleppschuhverteilers den Untergrund aufschlitzen, wobei durch entsprechende Winkelverstellung eingestellt werden kann, wie stark die Einarbeitungseinheiten zu den Schleppschuhen und somit zur Fahrtrichtung angestellt sind.

Schließlich sieht eine weitere mögliche Ausgestaltung der Erfindung vor, dass die Winkelverstellungen jeweilige verschwenkbar gegenüber den Schleppschuhen angeordnete Halter aufweisen, an denen die Einarbeitungseinheiten zumindest mittelbar befestigt sind. Diese Halter können beispielsweise eine bogenförmige Führung, Nut oder Ausnehmung aufweisen, wobei ein Stift oder Ähnliches hindurchgeführt und fixiert werden kann, um die jeweiligen Winkelstellungen der Einarbeitungseinheiten zu variieren und in die jeweiligen Stellungen zu fixieren. Auch bei der Winkelverstellung beziehungsweise der Veränderung der Anstellwinkel der Einarbeitungseinheiten kann es vorgesehen sein, entsprechende Aktoren vorzusehen, mittels welchen die Anstellwinkel verändert werden können.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht eines Schleppschuhverteilers zum Verteilen von Gülle, der mehrere Gülleschläuche zum Ausbringen der Gülle, jeweilige Schleppschuhe und Einarbeitungseinheiten aufweist, die dazu dienen, die auf einem Untergrund ausgebrachte Gülle abrollend in den Untergrund einzuarbeiten;
- Fig. 2: jeweilige Detailansichten von zwei Gülleschläuchen mit daran angebrachten Schleppschuhen und Einarbeitungseinheiten, wobei die Einarbeitungseinheiten relativ zu den Schleppschuhen in unterschiedlichen Höhenpositionen angeordnet sind;
- Fig. 3: eine Perspektivansicht einer weiteren möglichen Ausführungsform der Einarbeitungseinheiten, wobei diese als eine Art glatte Scheibe ausgebildet ist;
- Fig. 4: eine Perspektivansicht einer weiteren möglichen Ausführungsform der Einarbeitungseinheiten, wobei diese als gezackte Scheibe ausgebildet und zudem noch hinsichtlich ihres Anstellwinkels veränderbar ist.

In den Figuren sind gleiche oder funktionsgleiche Elemente mit den gleichen Bezugszeichen versehen.

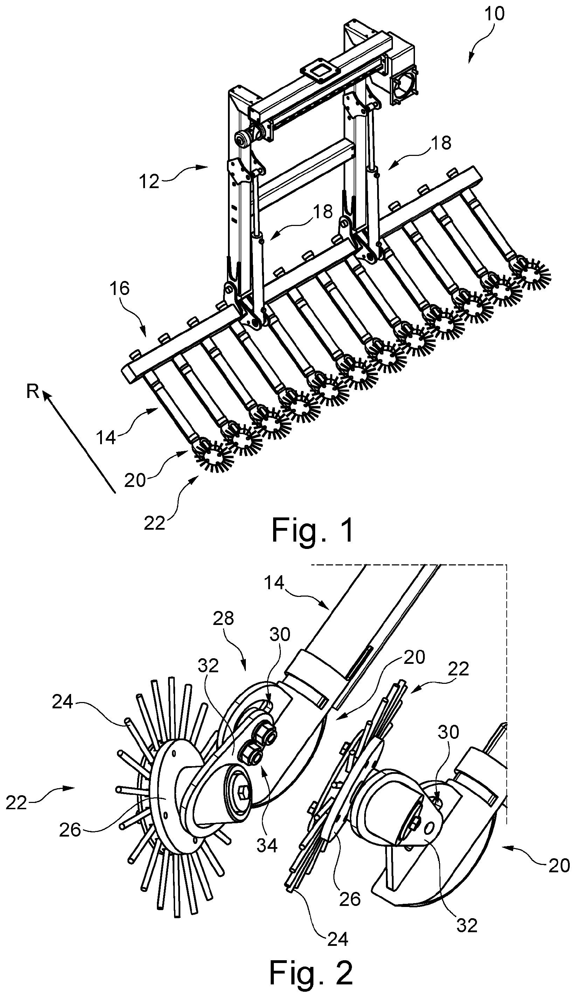

Ein Schleppschuhverteiler 10 ist in einer Perspektivansicht in Fig. 1 gezeigt. Der Schleppschuhverteiler 10 umfasst eine Art Traggestell 12, an dem mehrere Gülleschläuche 14 zum Ausbringen von Gülle in einer Reihe nebeneinander angeordnet sind. Die Gülleschläuche 14 sind an einem Querträger 16 angebracht, der mittels Hydraulikzylindern 18 relativ zum Traggestell 12 nach oben und nach unten verschwenkt werden kann. In der hier nach unten geschwenkten Stellung des Querträgers 16 befindet sich der Schleppschuhverteiler 10 in seiner Arbeitsstellung, in der die jeweiligen Gülleschläuche 14 nach unten verschwenkt worden sind, sodass jeweilige an den Gülleschläuchen 14 angeordnete Schleppschuhe 20 den Untergrund aufschlitzen können, bevor die Gülle aus hier jeweils nicht erkennbaren Austrittsöffnungen der Gülleschläuche 14 auf den Untergrund gelangt. Im Bereich der Austrittsöffnungen der Gülleschläuche 14 sind je Gülleschlauch 14 jeweilige Einarbeitungseinheiten 22 angeordnet, die in der hier gezeigten Arbeitsstellung des Schleppschuhverteilers 10 dazu ausgelegt sind, beim Fortbewegen des Schleppschuhverteilers 10 auf der ausgebrachten Gülle abrollend diese in den Untergrund einzuarbeiten.

Bezogen auf eine vorgegebene Fahrtrichtung R des Schleppschuhverteilers 10 sind die Schleppschuhe 20 also vor besagten jeweiligen Austrittsöffnungen der Gülleschläuche 14 angeordnet. Bezogen auf die vorgegebene Fahrtrichtung R des Schleppschuhverteilers 10 sind die Einarbeitungseinheiten 22 wiederum hinter den jeweiligen Austrittsöffnungen der Gülleschläuche 14 angeordnet. Mit anderen Worten sind in der hier gezeigten Arbeitsstellung des Schleppschuhverteilers 10 bezogen auf die Fahrtrichtung R des Schleppschuhverteilers 10 die Austrittsöffnungen der Gülleschläuche 14 zwischen den Schleppschuhen 20 und den Einarbeitungseinheiten 22 angeordnet.

In Fig. 2 ist eine mögliche Ausführungsform der Einarbeitungseinheiten 22 in unterschiedlichen Einstellungen gezeigt. Die hier gezeigte Ausführungsform der Einarbeitungseinheiten 22 weist mehrere sich radial nach außen erstreckende Zinken 24 zum Einarbeiten der ausgebrachten Gülle in den Untergrund auf. Die Zinken können beispielsweise aus Rundstäben gebildet sein, die kreisförmig an einer Art Grundkörper 26 angebracht sind. Die Zinken 24 können beispielsweise aus Federstahl hergestellt sein, wobei auch andere Materialien möglich sind. Der Grundkörper 26 ist dabei drehbar gelagert, sodass wiederum die Zinken 24 bei der Fortbewegung des Schleppschuhverteilers 10 auf dem Untergrund abrollen und so die abgelegte beziehungsweise applizierte Gülle in den Untergrund einarbeiten können.

Mittels einer Höhenverstellung 28 ist es möglich, die jeweiligen Einarbeitungseinheiten 22 relativ zu den Schleppschuhen 20 in der Höhe und damit eine Eindringtiefe der Einarbeitungseinheiten 22 in den Untergrund zu verstellen. Vorliegend weisen die jeweiligen Höhenverstellungen 28 bogenförmige Führungen 30 auf, in denen jeweilige Halter 32 geführt sind, an denen die Einarbeitungseinheiten 22 zumindest mittelbar gelagert sind. Beispielsweise durch Anziehen und Lösen einer Mutter 34 ist es möglich, eine Fixierung des Halters 32 innerhalb der bogenförmigen Führung 30 zu lösen beziehungsweise zu arretieren. Ist die Arretierung gelöst, so kann der Halter 32 innerhalb der bogenförmigen Führung 30 verstellt beziehungsweise verschoben werden. Wurde dann eine passende Höheneinstellung für die Einarbeitungseinheiten 22 gefunden, so kann die Mutter 34 wiederum angezogen werden, um diese Einstellung zu fixieren. In der vorliegenden Abbildung kann man zwei der Einarbeitungseinheiten 22 in unterschiedlichen Höhenpositionen erkennen.

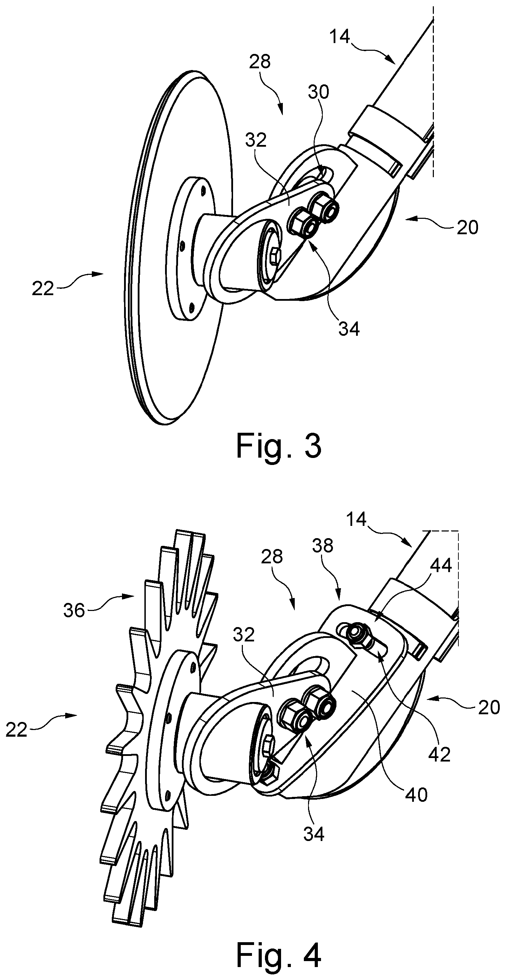

In Fig. 3 ist eine weitere mögliche Ausgestaltung der Einarbeitungseinheit 22 in einer Perspektivansicht gezeigt. Im vorliegend gezeigten Fall ist die Einarbeitungseinheit 22 als glatte Scheibe ausgebildet. Ansonsten unterscheidet sich die hier gezeigte ausschnittsweise Ausgestaltung des Schleppschuhverteilers 10 nicht weiter von der in Fig. 2 gezeigten Ausführungsform.

In Fig. 4 ist eine weitere mögliche Ausgestaltung der Einarbeitungseinheit 22 in einer Perspektivansicht gezeigt. Die hier gezeigte Ausführungsform der Einarbeitungseinheit 22 ist als eine Art gezackte Scheibe ausgebildet. Mehrere Zacken 36 erstrecken sich dabei in radialer Richtung und können dazu beitragen, die applizierte Gülle besonders gut in den Untergrund einzuarbeiten. Zusätzlich ist im hier gezeigten Fall noch eine Winkelverstellung 38 dargestellt, die dazu ausgelegt ist, einen Anstellwinkel der Einarbeitungseinheit 22 relativ zu dem Schleppschuh 20 und damit zu der besagten Fahrtrichtung R (siehe Fig. 1) des Schleppschuhverteilers 10 zu verstellen. Die Winkelverstellung 38 umfasst eine verschwenkbar gegenüber dem Schleppschuh 20 angeordneten Halter 40, an dem die Einarbeitungseinheit 22 mittelbar befestigt ist, und zwar vorliegend unter Vermittlung der Höhenverstellung 28. Der Halter 40 umfasst eine bogenförmige Führung 42 in Form einer Durchgangsöffnung, wobei durch Anziehen beziehungsweise Lösen einer Mutter 44 der Halter 40 relativ zu dem Schleppschuh 20 verschwenkt werden kann. Dadurch kann der besagte Anstellwinkel der Einarbeitungseinheit 22 verändert werden. Die Einarbeitungseinheit 22 kann dadurch mal stärker und mal weniger stark quer zur Fahrtrichtung R eingestellt werden. Damit kann die "Aggressivität" der Einarbeitungseinheit 22 variiert werden, je nach Randbedingungen beim Einarbeiten beziehungsweise Austragen der Gülle.

Diese Winkelverstellung 38 kann man bei sämtlichen Ausführungsformen der Einarbeitungseinheiten 22 zum Tragen kommen, also abweichend von den Darstellungen in den Figuren 2 und 3, auch bei diesen Ausführungsformen vorgesehen sein.

### BEZUGSZEICHENLISTE

- 10: Schleppschuhverteiler
- 12: Traggestell
- 14: Gülleschläuche
- 16: Querträger
- 18: Hydraulikzylinder
- 20: Schleppschuhe
- 22: Einarbeitungseinheiten
- 24: Zinken
- 26: Grundkörper
- 28: Höhenverstellung
- 30: Führungen
- 32: Halter
- 34: Mutter
- 36: Zacken
- 38: Winkelverstellung
- 40: Halter
- 42: Führung
- R: Fahrtrichtung

## Patentansprüche

1. Schleppschuhverteiler (10) zum Verteilen von Gülle, umfassend
- mehrere Gülleschläuche (14) mit Austrittsöffnungen zum Ausbringen der Gülle auf einem Untergrund;
- mehrere Schleppschuhe (20), die in einer Arbeitsstellung des Schleppschuhverteilers (10) dazu ausgelegt sind, den Untergrund aufzuschlitzen, bevor die Gülle aus den Austrittsöffnungen auf den Untergrund gelangt;
- mehrere Einarbeitungseinheiten (22), die in der Arbeitsstellung des Schleppschuhverteilers (10) dazu ausgelegt sind, beim Fortbewegen des Schleppschuhverteilers (10) auf der ausgebrachten Gülle abrollend diese in den Untergrund einzuarbeiten, **dadurch gekennzeichnet, dass** der Untergrund mittels der Einarbeitungseinheiten (22) aufgelockert beziehungsweise aufgerissen wird, um mittels der Einarbeitungseinheiten (22) die applizierte Gülle in den Untergrund einzuarbeiten.

2. Schleppschuhverteiler (10) nach Anspruch 1, wobei in der Arbeitsstellung des Schleppschuhverteilers (10) bezogen auf eine Fahrtrichtung (R) des Schleppschuhverteilers (10) die Austrittsöffnungen der Gülleschläuche (14) zwischen den Schleppschuhen (20) und den Einarbeitungseinheiten (22) angeordnet sind.

3. Schleppschuhverteiler (10) nach einem der vorhergehenden Ansprüche, wobei zumindest ein Teil der Einarbeitungseinheiten (22) mehrere sich radial nach außen erstreckende Zinken (24) zum Einarbeiten der ausbrachten Gülle in den Untergrund aufweist.

4. Schleppschuhverteiler (10) nach einem der vorhergehenden Ansprüche, wobei zumindest ein Teil der Einarbeitungseinheiten (22) als glatte Scheibe ausgebildet ist.

5. Schleppschuhverteiler (10) nach einem der vorhergehenden Ansprüche, wobei zumindest ein Teil der Einarbeitungseinheiten (22) als gezackte Scheibe ausgebildet ist.

6. Schleppschuhverteiler (10) nach einem der vorhergehenden Ansprüche, wobei jeweilige Höhenverstellungen (28) dazu ausgelegt sind, die Einarbeitungseinheiten (22) relativ zu den Schleppschuhen (20) in der Höhe und damit eine Eindringtiefe der Einarbeitungseinheiten (22) in den Untergrund zu verstellen.

7. Schleppschuhverteiler (10) nach Anspruch 6, wobei die Höhenverstellungen (28) jeweilige an den Schleppschuhen (20) angeordnete bogenförmige Führungen (30) aufweisen, in denen jeweilige Halter (32) geführt sind, an denen die Einarbeitungseinheiten (22) zumindest mittelbar gelagert sind.

8. Schleppschuhverteiler (10) nach einem der vorhergehenden Ansprüche, wobei jeweilige Winkelverstellungen (38) dazu ausgelegt sind, jeweilige Anstellwinkel der Einarbeitungseinheiten (22) relativ zu den Schleppschuhen (20) und damit zu einer Fahrtrichtung (R) des Schleppschuhverteilers (10) zu verstellen.

9. Schleppschuhverteiler (10) nach Anspruch 8, wobei die Winkelverstellungen (38) jeweilige verschwenkbar gegenüber den Schleppschuhen (22) angeordnete Halter (40) aufweisen, an denen die Einarbeitungseinheiten (22) zumindest mittelbar befestigt sind.

## Claims

1. Trailing shoe spreader (10) for spreading manure, comprising
- a plurality of manure hoses (14) with outlet openings for spreading the manure onto a ground surface;
- a plurality of trailing shoes (20) which, in an operating position of the trailing shoe spreader (10), are configured to slice into the ground before the manure from the outlet openings reaches the ground;
- a plurality of working units (22) which, in the operating position of the trailing shoe spreader (10), are configured to roll over the applied manure as the trailing shoe spreader (10) moves forward, thereby working it into the ground, **characterized in that** the ground is loosened or ripped into by the working units (22) in order to work the applied manure into the ground by means of the working units (22).

2. Trailing shoe spreader (10) according to claim 1, wherein, in the operating position of the trailing shoe spreader (10) relative to a direction of travel (R) of the trailing show spreader (10), the outlet openings of the manure hoses (14) are arranged between the trailing shoes (20) and the working units (22).

3. Trailing shoe spreader (10) according to any one of the preceding claims, wherein at least a portion of the working units (22) comprises a plurality of tines (24) extending radially outwards for working the applied manure into the ground.

4. Trailing shoe spreader (10) according to any one of the preceding claims, wherein at least a portion of the working units (22) are in the form of smooth discs.

5. Trailing shoe spreader (10) according to any one of the preceding claims, wherein at least a portion of the working units (22) are in the form of serrated discs.

6. Trailing shoe spreader (10) according to any one of the preceding claims, wherein respective height adjustment mechanisms (28) are configured to adjust the height of the working units (22) relative to the trailing shoes (20) and thereby adjust a penetration depth of the working units (22) into the ground.

7. Trailing shoe spreader (10) according to claim 6, wherein the height adjustment mechanisms (28) comprise respective arcuate guides (30) arranged on the trailing shoes (20), in which respective holders (32) are guided, on which the working units (22) are at least indirectly mounted.

8. Trailing shoe spreader (10) according to any one of the preceding claims, wherein respective angle adjustment mechanisms (38) are configured to adjust respective angles of attack of the working units (22) relative to the trailing shoes (20) and thus relative to a direction of travel (R) of the trailing shoe spreader (10).

9. Trailing shoe spreader (10) according to claim 8, wherein the angle adjustment mechanisms (38) comprise respective holders (40) arranged so as to be pivotable relative to the trailing shoes (22), to which holders the working units (22) are at least indirectly attached.

## Revendications

1. Épandeur d'enfouissement à patins (10) pour l'épandage de lisier comprenant
- plusieurs tuyaux de lisier (14) avec des ouvertures de sortie pour l'épandage de lisier sur un sol ;
- plusieurs patins d'enfouissement (20) qui sont conçus dans une position de travail de l'épandeur d'enfouissement à patins (10) afin de fendre le sol avant que le lisier ne parvienne sur le sol depuis les ouvertures de sortie ;
- plusieurs unités d'incorporation (22) qui sont conçues dans la position de travail de l'épandeur d'enfouissement à patins (10) afin d'incorporer dans le sol le lisier épandu en roulant dessus lors du déplacement de l'épandeur d'enfouissement à patins (10), **caractérisé en ce que** le sol est ameubli ou scarifié au moyen des unités d'incorporation (22) afin d'incorporer le lisier appliqué dans le sol au moyen des unités d'incorporation (22).

2. Épandeur d'enfouissement à patins (10) selon la revendication 1, dans lequel les ouvertures de sortie des tuyaux de lisier (14) sont agencées entre les patins d'enfouissement (20) et les unités d'incorporation (22) dans la position de travail de l'épandeur d'enfouissement à patins (10) par rapport à un sens de déplacement (R) de l'épandeur d'enfouissement à patins (10).

3. Épandeur d'enfouissement à patins (10) selon l'une quelconque des revendications précédentes, dans lequel au moins une partie des unités d'incorporation (22) présente plusieurs dents (24) s'étendant radialement vers l'extérieur pour l'incorporation du lisier épandu dans le sol.

4. Épandeur d'enfouissement à patins (10) selon l'une quelconque des revendications précédentes, dans lequel au moins une partie des unités d'incorporation (22) est formée comme disque lisse.

5. Épandeur d'enfouissement à patins (10) selon l'une quelconque des revendications précédentes, dans lequel au moins une partie des unités d'incorporation (22) est formée comme disque dentelé.

6. Épandeur d'enfouissement à patins (10) selon l'une quelconque des revendications précédentes, dans lequel des réglages en hauteur (28) respectifs sont conçus afin de régler les unités d'incorporation (22) par rapport aux patins d'enfouissement (20) en hauteur et régler ainsi une profondeur de pénétration des unités d'incorporation (22) dans le sol.

7. Épandeur d'enfouissement à patins (10) selon la revendication 6, dans lequel les réglages en hauteur (28) présentent des guidages (30) respectifs arqués agencés au niveau des patins d'enfouissement (20), guidages dans lesquels des supports (32) respectifs sont guidés, au niveau desquels les unités d'incorporation (22) sont logées au moins indirectement.

8. Épandeur d'enfouissement à patins (10) selon l'une quelconque des revendications précédentes, dans lequel des réglages angulaires (38) respectifs sont conçus afin de régler des angles d'attaque respectifs des unités d'incorporation (22) par rapport aux patins d'enfouissement (20) et ainsi par rapport à un sens de déplacement (R) de l'épandeur d'enfouissement à patins (10).

9. Épandeur d'enfouissement à patins (10) selon la revendication 8, dans lequel les réglages angulaires (38) présentent des supports (40) respectifs agencés de manière pivotante par rapport aux patins d'enfouissement (22), supports auxquels les unités d'incorporation (22) sont au moins indirectement fixés.
